# EUROPEAN PATENT SPECIFICATION

(11) **EP 2 336 729 B1**
(45) Date of publication and mention of the grant of the patent: **03.09.2014**
(21) Application number: 09812891.1
(22) Date of filing: 10.09.2009
(51) Int. Cl.: G01D 5/245, F16C 19/00, F16C 33/30, F16C 41/00, G01D 5/14

(54) **ROTATION DETECTING DEVICE AND BEARING WITH ROTATION DETECTING DEVICE**
ROTATIONSERFASSUNGSVORRICHTUNG UND LAGER MIT DER ROTATIONSERFASSUNGSVORRICHTUNG
DISPOSITIF DE DÉTECTION DE ROTATION ET ROULEMENT AVEC DISPOSITIF DE DÉTECTION DE ROTATION

(30) Priority: 11.09.2008 JP 2008233147; 11.09.2008 JP 2008233148
(43) Date of publication of application: 22.06.2011
(60) Divisional application: 14166457.3
(73) Proprietor: NTN Corporation, Osaka-shi, Osaka 550-0003 (JP)
(72) Inventor: TAKAHASHI, Toru, Iwata-shi Shizuoka 438-0037 (JP); UENO, Shintarou, Iwata-shi Shizuoka 438-0037 (JP); DESBIOLLES, Pascal, Thorens-Glieres 74570 (FR); PETERSCHMITT, Cyril, 74330 La Balme de Sillingy (FR)
(74) Representative: Hirsch & Associés
(86) International application number: PCT/JP2009/004482
(87) International publication number: WO 2010/029742

(56) References cited:
- EP-A2- 1 296 144
- WO-A1-2008/102556
- WO-A1-2008/129872
- JP-A- 2004 084 925
- JP-A- 2006 226 951
- JP-A- 2006 337 356
- JP-A- 2008 051 770

## Description

The present invention relates to a rotation detecting device for use in various machines and equipments, in particular to the rotation detecting device for use in detecting the rotational angle, which is used in controlling the rotation of various types of motors, and to a rotation detector equipped bearing assembly having such rotation detecting device mounted on thereon.

### (Description of Related Art)

The rotation detecting device of the kind referred to above has been suggested (in, for example, the Patent Documents 1 and 2 listed below), which includes a ring shaped magnetic pulse generating element such as, for example, a magnetic encoder having magnetic pole pairs arranged in, for example, a circumferential direction for generating magnetic pulses, and a plurality of magnetic sensor elements arranged substantially in a line in the circumferential direction relative to the magnetic pulse generating element for detecting the magnetic pulses, so that the absolute angle can be detected by calculating respective output signals from the magnetic sensor elements.

Another rotation detecting device has also been suggested (in, for example, the Patent Document 3 listed below), which includes a magnetic drum having two magnetic encoders having different numbers of magnetic poles per rotation, and two magnetic sensor for detecting the magnetic field of each of those magnetic encoders, so that the absolute angle can be detected based on the difference in phase between the respective magnetic field signals of the two magnetic encoder that are detected by the magnetic sensors.
[Patent Document 1] JP Laid-open Patent Publication No. 2001-518608
[Patent Document 2] JP Laid-open Patent Publication No. 2002-541485
[Patent Document 3] JP Laid-open Patent Publication No. H06-058766

### SUMMARY OF THE INVENTION

It has, however, been found that with the rotation detecting devices referred to above, it is difficult to detect the absolute angle of a high resolution from the magnetic encoder.

In view of the above, it may be contemplated that if as a magnetic sensor, a device having a function of detecting information on the position within the range of magnetic poles of the magnetic encoder, such as that employed in the rotation detecting device disclosed in any one of the Patent Documents 1 and 2 referred to above, were to be employed in the rotation detecting device disclosed in the Patent Document 3 referred to above, the absolute angle of a high resolution can be detected.

However, in the contemplated rotation detecting device of the type discussed above, where a plurality of magnetic sensors and a calculating circuit are desired to be integrated on the same semiconductor chip, positioning of the two magnetic encoders in adjoining relation to each other to thereby narrow the gap between those magnetic sensors may result in reduction in angle detecting accuracy as a result of interference of respective magnetic patterns of those two magnetic encoders with each other. Therefore, the phase difference required to calculate the absolute angle cannot be obtained accurately and a calculation error in calculating the absolute angle may increase.

Although the above discussed problem may be alleviated if the two magnetic sensors are positioned with a large gap left therebetween, the employment of the large gap results in increase of the surface area of the semiconductor chip, resulting in increase of the cost. Also, where magnetic encoders magnetized separately are combined, fabrication process may become complicated.

An object of the present invention is to provide a rotation detecting device of a kind simple in structure and capable of detecting the absolute angle accurately with a high resolution.

The rotation detecting device of the present invention includes a plurality of ring-shaped magnetic encoders provided concentrically with each other and having different numbers of magnetic poles, each of the magnetic encoders having a magnetization row pattern with a plurality of magnetic poles arranged circumferentially thereof; a plurality of magnetic sensors each operable to detect a magnetic field emanating from the corresponding magnetic encoder; an angle calculating unit for determining the absolute angle of the magnetic encoders based on magnetic field signals detected respectively by the magnetic sensors; and at least one core metal carrying the plurality of the magnetic encoders, see WO-A-2008/102556. The present invention is, in one aspect, characterized in that the core metal is formed integrally with a projection portion protruding towards an encoder support surface side, on which the magnetic encoders are mounted, the projection portion being situated intermediate between the neighboring magnetic encoders.

According to the foregoing construction, since the numbers of the magnetic poles of the plural magnetic encoders are different from each other, the absolute angle can be detected. By way of example, when the magnetic encoders having 12 magnetic pole pairs and 13 magnetic pole pairs, respectively, are rotated, a phase lag corresponding to one magnetic pole pair occurs per one complete rotation between respective signals of the two magnetic sensors used to detect the associated magnetic fields and, therefore, the absolute angle for the interval of one complete rotation can be calculated by the angle calculating unit based on this phase difference.

In particular, since the or each core metal is integrally formed with the projection portion positioned between the neighboring magnetic encoders and protruding towards the encoder support surface side where the magnetic encoders are provided, the neighboring magnetic encoders are separated from each other in the presence of the projection portion of the or each core metal therebetween. Accordingly, with no need to increase the gap between the magnetic sensors, the interference between the respective magnetic patterns emanating from the magnetic encoders can be minimized and the detection error in detecting the absolute angle, which results from the interference between the magnetic fields, can also be reduced, allowing the absolute angle to be detected accurately. Also, since with no need to increase the gap between the magnetic sensors, the accuracy with which the absolute angle can be detected can be increased, the cost of manufacture can be reduced even when the magnetic sensors are integrated on the semiconductor chip together with the calculating circuit to provide a sensor module.

In one embodiment of the present invention, the plurality of the magnetic encoders may be mounted on a single common core metal and the projection portion is in the form of a bent portion having a ring shape that protrudes towards the encoder support surface formed in the common core metal with the magnetic encoders mounted thereon.

Since the ring shaped core metal is formed with the bent shaped, bent portion of the ring shape as the projection portion so as to protrude towards the side of the encoder support surface, where the magnetic encoders are mounted, and situated intermediate between the neighboring magnetic encoders, the neighboring magnetic encoders are separated from each other by the bent portion of the ring shape. Also, since the plural magnetic encoders are mounted on the common core metal, the structure can be simplified. As a result, with the structure simplified, the absolute angle can be accurately detected with a high resolution.

In one embodiment of the present invention, the plurality of the magnetic encoders may be juxtaposed relative to each other in an axial direction and mounted on the respective core metals, and the core metals may have respective axially oriented ends, which are situated on the same sides, are formed with respective radially outwardly extending flanges that form the projection portions.

Since the radially outwardly extending flange, which forms the projection portion, is formed in the axially oriented ends of the core metals in the core metal equipped magnetic encoders, which are situated on the same side, the neighboring magnetic encoders are separated from each other by the flange of the core metal. Also, formation of the flange in one end of the core metal results in an increase of the rigidity of the core metal and, accordingly, an undesirable deformation of the magnetic encoders, which would otherwise occur when the core metal is to be fitted to the rotating member, can be suppressed, thus allowing the absolute angle to be detected accurately.

According to a second aspect, the present invention is characterized in that the projection portion has a tip height chosen to be lower than a surface height of the magnetic encoders with the neighboring magnetic encoders on respective sides of the projection portion separated from each other by a tip of the projection portion intervening therebetween.

In this case, since at the position of the tip of the projection portion the neighboring magnetic encoders are completely separated from each other with a gap present therebetween, an effect of suppressing the undesirable interference between the magnetic patterns emanating from the magnetic encoders can be obtained. Moreover, in such case, the distance between the core metal and the magnetic sensors can be properly secured.

In one embodiment of the present invention, the core metal may be made of a magnetic material.

Although material for the or each core metal may be a non-magnetic material, the use of the or each core metal made of the magnetic material is effective to minimize the undesirable interference between the magnetic patterns emanating from the neighboring magnetic encoders enough to allow the absolute angle to be accurately detected with no need to expand the space between the corresponding magnetic sensors.

In one embodiment of the present invention, each of the magnetic encoders may include a rubber magnet formed by bonding an elastic member, mixed with a powdery magnetic material, by vulcanization to the corresponding core metal made of a magnetic material, and then forming magnetic poles alternately in a direction circumferentially of such core metal.

In one embodiment of the present invention, each of the magnetic encoders may include a resin magnet formed by providing the corresponding core metal, made of a magnetic material, with a resin formed body, formed of a resin mixed with a powdery magnetic material, and then forming magnetic poles alternately in a direction circumferentially of such core metal.

In one embodiment of the present invention, each of the magnetic encoders may be in the form of a sintered magnet formed by forming in a sintered body, made of a sintered mixture of a powdery magnetic material and a powdery non-magnetic material, magnetic poles alternately in a direction circumferentially of such core metal.

In one embodiment of the present invention, each of the magnetic sensors may include a line sensor having a plurality of sensor elements arranged in a direction in which magnetic poles of each of the magnetic encoders are arranged.

If each of the magnetic sensors is employed in the form of the line sensor, the distribution of magnetic fields of the corresponding magnetic encoders can be finely detected as a signal of a sinusoidal waveform represented by an analog voltage, not an ON-OFF signal, and, hence, an accurate detection of the absolute angle can be accomplished.

In such case, each of the magnetic sensors employed in the form of the line sensor as described above may be of a type in which two phase output signals of sin and cos are generated by calculation to detect the position within the magnetic poles. Also, instead of the line sensor, each of the magnetic sensors may be of a type including a plurality of sensor elements arranged at respective locations displaced a distance from each other within the magnetic pole pitch in a direction in which the magnetic poles are arranged so that the two phase output signals of sin and cos can be obtained, with the position within the magnetic poles being detected by multiplying them.

The rotation detector equipped bearing assembly of the present invention may have the rotation detecting device of the present invention incorporated therein.

According to the above construction, since the rotation detecting device and the bearing unit are integrated together, no positioning of the magnetic encoders and the magnetic sensors is needed and, hence, it is convenient to handle. Also, while the absolute angle detecting function is possessed, not only can the number of component parts used in a bearing using machine or equipment and the number of assembling steps be reduced, but downsizing can also be accomplished.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic diagram showing one example of a rotation detecting device according to a first embodiment;
Fig. 2 is a fragmentary side view showing another example of the rotation detecting device;
Fig. 3 is a cross sectional view, on an enlarged scale, taken along the line III-III in Fig. 1;
Fig. 4 is a cross sectional view, on an enlarged scale, taken along the line IV-IV in Fig. 2;
Fig. 5A is a sectional view showing one example of a bent shaped, bent portion of a core metal;
Fig. 5B is a sectional view showing another example of the bent
   shaped, bent portion of the core metal, according to the present invention;
Fig. 6 is an explanatory diagram showing one example of arrangement of magnetic sensors;
Fig. 7A is an explanatory diagram showing another example of arrangement of the magnetic sensors;
Fig. 7B is an explanatory diagram showing another example of arrangement of the magnetic sensors;
Fig. 7C is an explanatory diagram showing another example of arrangement of the magnetic sensors;
Fig. 8 is a chart showing the waveforms a detection signal of the magnetic sensor and a detection signal of a phase difference detecting section;
Fig. 9 is a chart showing the waveforms showing the phase of the detection signal of each of the magnetic sensors and the phase difference of those detection signals;
Fig. 10 is a block diagram showing one exemplary structure of an absolute angle detecting circuit employed in the rotation detecting device;
Fig. 11 is a block diagram showing another exemplary structure of the absolute angle detecting circuit;
Fig. 12 is a chart showing an absolute angle error, exhibited by the rotation detecting device of the present invention, and a similar absolute angle error exhibited by a different rotation detecting devices, which are shown for comparison;
Fig. 13 is a sectional view showing a rotation detector equipped bearing assembly having mounted thereon the rotation detecting device designed according to the present invention;
Fig. 14 is a schematic diagram showing one example of the rotation detecting device according to a second embodiment;
Fig. 15 is a cross sectional view, on an enlarged scale, taken along the line XV-XV in Fig. 14;
Fig. 16 is an enlarged sectional view showing a core metal equipped magnetic encoder;
Fig. 17A is a sectional view showing one example of a flange in the core metal;
Fig. 17B is a sectional view showing a different example of the flange in the core metal in accordance with the present invention; and
Fig. 18 is a sectional view showing the rotation detector equipped bearing assembly having mounted thereon the rotation detecting device.

### DETAILED DESCRIPTION OF THE PREFERRED EMBODIMENTS

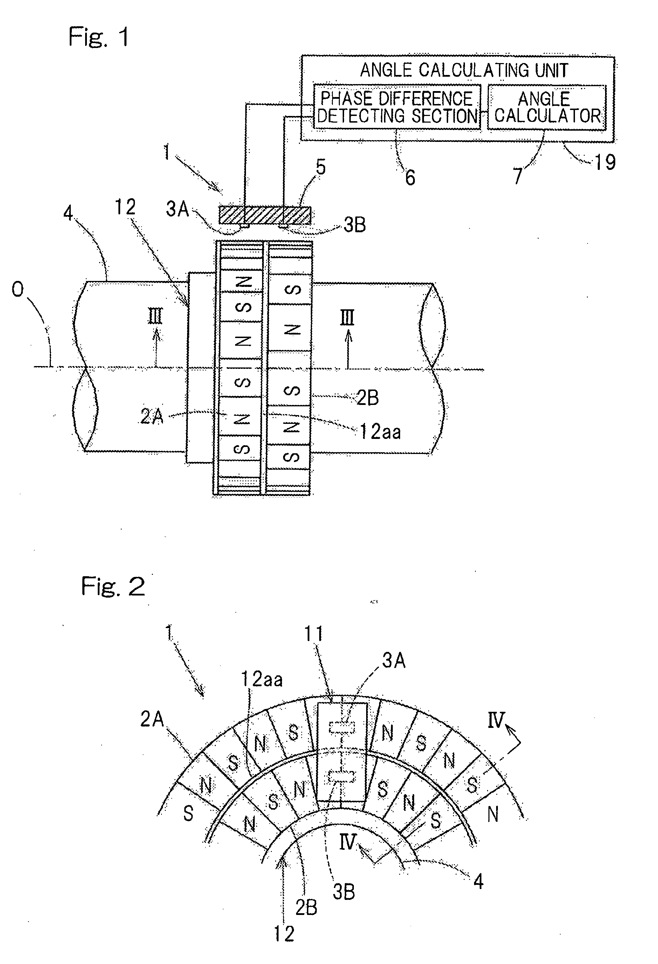

A first embodiment will now be described in detail with particular reference to Figs. 1 to 13. Fig. 1 illustrates a schematic structure of a rotation detecting device according to this first embodiment. The illustrated rotation detecting device 1 includes a plurality of, for example, two, ring shaped magnetic encoders 2A and 2B, provided on a rotating member 4 such as, for example, a rotary shaft of a motor in concentric relation to each other about the longitudinal axis O of such rotating member 4, and a plurality of, for example, two, magnetic sensors 3A and 3B for detecting respective magnetic fields emanating from those magnetic encoders 2A and 2B.

In this rotation detecting device shown in Fig. 1, the magnetic sensors 3A and 3B are mounted on a stationary member 5 in the form of, for example, a housing of the motor so as to confront the magnetic encoders 2A and 2B in a direction radially thereof with a minute gap left between those magnetic sensors 3A and 3B and the magnetic encoders 2A and 2B. In the illustrated instance, the magnetic sensor 3A is held in a face-to-face relation with the magnetic encoder 2A whereas the magnetic sensor 3B is held in a face-to-face relation with the magnetic encoder 2B.

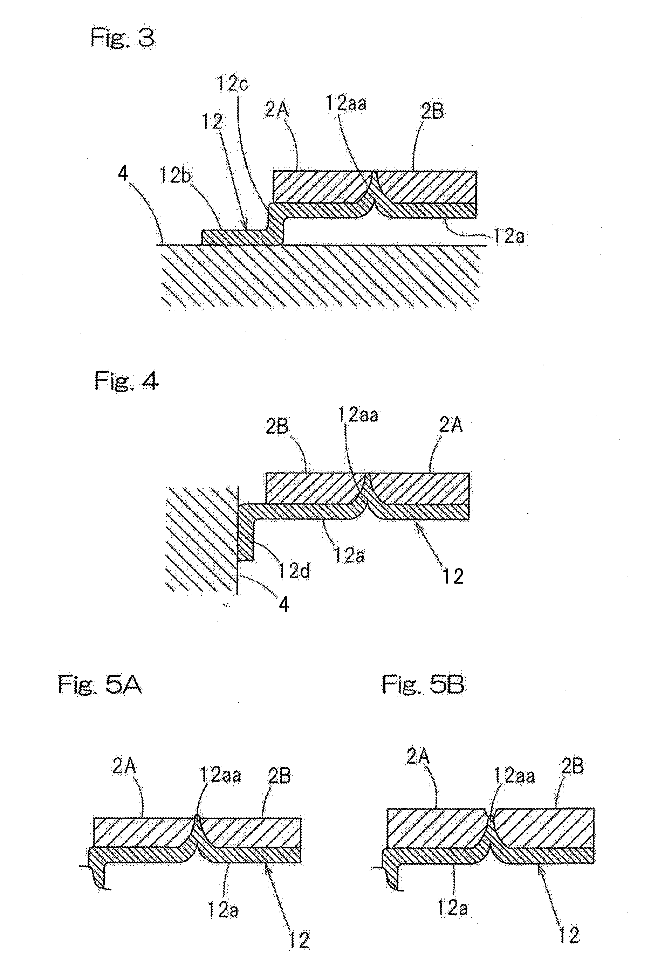

Fig. 3 illustrates a cross sectional representation taken along the line III-III in Fig. 1. As shown therein, the magnetic encoders 2A and 2B are mounted on the rotating member 4 through a single common core metal 12. The core metal 12 is a member of a substantially cylindrical shape having the two magnetic encoders 2A and 2B fixedly mounted on an outer peripheral surface thereof in an axially juxtaposed relation to each other. More specifically, the common core metal 12 is made up of an encoder support wall portion 12a, on which the two magnetic encoders 2A and 2B are fixedly mounted, and a cylindrical mount wall portion 12b extending coaxially from and radially undersized relative to the encoder support wall portion 12a with an annular stepped portion 12c intervening between the encoder support wall portion 12a and the cylindrical mount wall portion 12b. This core metal 12 is fixed to the rotating member 4 with the cylindrical mount wall portion 12b fitted onto an outer peripheral surface of the rotating member 4 for rotation together therewith. The encoder carrier area 12a of the common core metal 12 is formed integrally with a projection portion 12aa protruding towards an encoder support surface side, that is, radially outwardly and positioned intermediate between the neighboring magnetic encoders 2A and 2B. In other words, in the illustrated embodiment now under discussion, the circumferentially extending projection portion 12aa is formed coaxially in the core metal 12 and is in the form of a bent portion formed by bending a portion of the encoder carrier area 12a intermediate between the neighboring magnetic encoders 2A and 2B so as to protrude towards an encoder support surface side. The bent portion 12aa so formed separates the neighboring magnetic encoders 2A and 2B from each other. The common core metal 12 is in the form of a press product or the like prepared from a metal sheet such as, for example, a steel sheet by the use of any known press work.

Each of the magnetic encoders 2A and 2B is in the form of a ring shaped magnetic member having a plurality of magnetic pole pairs, each pair consisting of magnetic poles S and N, which are magnetized at equal pitches in a direction circumferentially thereof. In the example shown in Fig. 1, each of the magnetic encoders 2A and 2B is of a radial type and, hence, has an outer peripheral surface having the magnetic pole pairs magnetized. It is, however, to be noted that those two magnetic encoders 2A and 2B have respective numbers of the magnetic poles that are different from each other.

Alternatively, each of the magnetic encoders 2A and 2B may be of an axial type, in which a plurality of magnetic pole pairs are magnetized at equal pitches in the circumferential direction on an axial end face of the corresponding ring shaped magnetic member as shown in Fig. 2. In the example shown in Fig. 2, the neighboring magnetic encoders 2A and 2B are positioned one inside the other in a radial direction. Where the magnetic encoders 2A and 2B of the axial type as described above are employed, the magnetic sensors 3A and 3B are axially oriented so as to axially confront the magnetized end faces of the magnetic encoders 2A and 2B.

Fig. 4 illustrates a cross section taken along the line IV-IV in Fig. 2. The magnetic encoders 2A and 2B of the axial type shown in and described with reference to Fig. 2 are also mounted on the rotating member 4 through a common core metal 12 for rotation together therewith. Specifically, the common core metal 12 shown in Fig. 4 is made up of a ring shaped flat encoder carrier area 12a, on which the magnetic encoders 2A and 2B are fixedly and concentrically mounted, and a cylindrical mount wall portion 12d extending axially from a radially inner edge of the encoder carrier area 12a. With the cylindrical mount wall portion 12d fixedly mounted on the outer peripheral surface of the rotating member 4, the core metal 12 can be fixed to the rotating member 4. In this case, the encoder carrier area 12a is formed integrally with a projection portion, which is in the form of the ring-shaped bent portion 12aa protruding towards an encoder support surface side and positioned intermediate between the neighboring magnetic encoders 2A and 2B and which is formed by bending a portion of the encoder carrier area 12a intermediate between the neighboring magnetic encoders 2A and 2B so as to protrude towards the encoder support surface side. The bent portion 12aa so formed separates the neighboring magnetic encoders 2A and 2B from each other.

The core metal 12 may have a tip height either equal to or greater than a surface height of each of the magnetic encoders 2A and 2B, as shown in Fig. 5A, or, according to the present invention it has the tip height smaller than the surface height of each of the magnetic encoders 2A and 2B with the neighboring magnetic encoders 2A and 2B separated completely from each other by the tip of the bent portion 12aa as shown in Fig. 5B.

Each of the magnetic encoders 2A and 2B referred to above may include a rubber magnet formed by bonding an elastic member, mixed with a powdery magnetic material, by vulcanization to the core metal 12 made of, for example, a magnetic material, and then forming magnetic poles alternately in a direction circumferentially of the core metal 12.

Another example of construction of each of the magnetic encoders 2A and 2B may include a resin magnet formed by providing the core metal 12, made of a magnetic material, with a resin formed body, formed of a resin mixed with a powdery magnetic material, and then forming magnetic poles alternately in a direction circumferentially of the core metal 12.

A further example of construction of each of the magnetic encoders 2A and 2B may include a sintered magnet formed by forming in a sintered body, made of a sintered mixture of a powdery magnetic material and a powdery non-magnetic material.

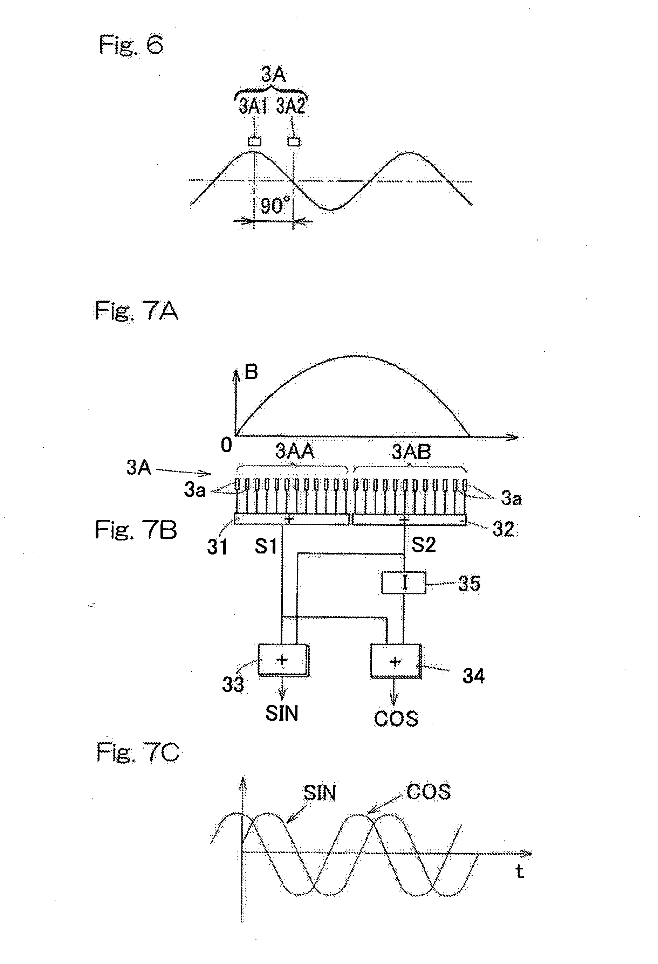

Each of the magnetic sensors 3A and 3B employed in the rotation detecting device is preferred to be of a type having a function of detecting the magnetic poles with a resolution higher than the number of the magnetic poles of the respective magnetic encoder 2A or 2B, that is, a function of detecting information on the position within the range of the magnetic poles of the respective magnetic encoder 2A or 2B. In order to satisfy this requirement, for, for example, the magnetic sensor 3A, two magnetic sensor elements 3A1 and 3A2 may be employed, which are so juxtaposed relative to each other in the circumferential direction and so spaced a distance from each other in the circumferential direction as to provide a 90° phase difference (λ/4) if the pitch λ of one magnetic poles in the associated magnetic encoder 2A be assumed to be one cycle as shown in Fig. 6. For the magnetic sensor elements 3A1 and 3A2, Hall elements or the like may be employed. The phase within magnetic pole (ϕ = tan⁻¹ (sin ϕ/cos ϕ) is calculated when respective two phase signals (sin ϕ and cos ϕ) that can be obtained from the two magnetic sensor elements 3A 1 and 3A2 are frequency multiplied by multiplying circuits built respectively in those two magnetic sensor elements 3A1 and 3A2. The description similar to that described in connection with the magnetic sensor 3A above equally applied to the other magnetic sensor 3B. It is to be noted that the waveform shown in Fig. 6 represents an arrangement of the magnetic poles of the magnetic encoder 2A converted into the magnetic field strength.

With the magnetic sensors 3A and 3B so constructed as hereinabove described, the distribution of magnetic fields of those magnetic encoders 2A and 2B can be finely detected as a signal of a sinusoidal waveform represented by an analog voltage, not an ON-OFF signal, and, hence, an accurate detection of the absolute angle can be accomplished.

As a different example of each of the magnetic sensor 3A and 3B having the function of detecting information on the position within the magnetic poles of the corresponding magnetic encoder 2A and 2B, line sensors such as shown in Fig. 7B may be employed. In other words, for, for example, the magnetic sensor 3A, line sensors 3AA and 3AB may be employed, in which magnetic sensor elements 3a are arranged in line in a direction along the direction in which the magnetic poles of the corresponding magnetic encoder 2A are deployed. It is to be noted that Fig. 7A illustrates the waveform representing the interval of one magnetic pole in the magnetic encoder 2A, which has been converted into the magnetic field strength. In such case, the first line sensor 3AA of the magnetic sensor 3A is disposed having been coordinated with the phase interval of 90° of the phase interval of 180° shown in Fig. 7A whereas the second line sensor 3AB is disposed having been coordinated with the remaining phase interval of 90°. Because of the arrangement of the first and second line sensors 3AA and 3AB in the manner as described above, a sin signal corresponding to such a magnetic field signal as shown in Fig. 7C can be obtained when a signal S1, which has been obtained by summing detection signals of the first line sensor 3AA by means of an summing circuit 31, and a signal S2, which has been obtained by summing detection signals of the second line sensor 3AB by means of an summing circuit 32, are summed together by means of another summing circuit 33. Similarly, a cos signal corresponding to such a magnetic field signal as shown in Fig. 7C can be obtained when the signal S 1 and the signal S2, fed through an inverter 35, are summed together by means of a further summing circuit 34. From the two phase output signals obtained in this way, the position within the magnetic poles is detected.

Where the magnetic sensors 3A and 3B are employed in the form of the line sensors of the kind discussed above, the interval of one magnetic pole pair of the magnetic encoders 2A and 2B can be accurately multiplied with the two phase signals (sin ϕ and cos ϕ). Also, since no calculation such as that of the inter-magnetic pole phase (ϕ = tan⁻¹(sin ϕ/cos ϕ)) is required, the detecting process is simple and can be performed at a high speed. Also, since the multiplied signal can be obtained by calculating a plurality of sensor outputs within a chip circuit, distortion of the magnetic field pattern and influence of noises can be reduced, the gap between the magnetic encoders 2A and 2B can be increased as compared with that in any other sensor structure and the phases of the magnetic encoders 2A and 2B can be detected with a further high accuracy.

By way of example, in the construction shown in Fig. 1, the magnetic sensors 3A and 3B are connected with an angle calculating unit 19. This angle calculating unit 19 includes a phase difference detecting section 6 for determining the phase difference between the magnetic signals detected respectively by the magnetic sensors 3A and 3B, and an angle calculator 7 connected with a subsequent stage thereof. The angle calculator 7 is a means operable to calculate the absolute angle of the magnetic encoders 2A and 2B based on the phase difference detected by the phase difference detecting section 6.

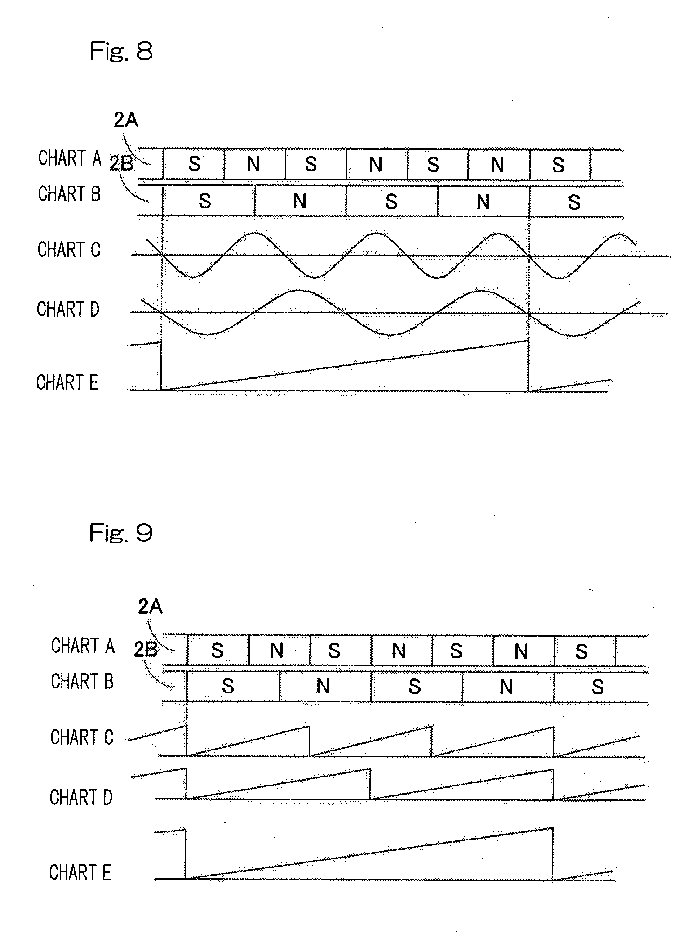

The outline of the operation to detect the absolute angle performed by the rotation detecting device 1 of the structure described hereinbefore will now be described with particular reference to Charts A to E in Fig. 8 and Charts A to E in Fig. 9. Referring to Fig. 1, assuming that the numbers of the magnetic pole pairs in the two magnetic encoders 2B and 2A are expressed by P and P + n, respectively, phase differences in terms of the magnetic pole pairs occurring between the magnetic encoders 2A and 2B for each complete rotation is n, and, therefore, the phases of the detection signals from the magnetic sensors 3A and 3B, which correspond to respective magnetic encoders 2A and 2B, respectively, coincide with each other for each 360/n degree rotation.

Examples of the patterns of magnetic poles of the magnetic encoders 2A and 2B are shown in Charts A and B of Fig. 8, respectively, and waveforms of the detection signals of the magnetic sensors 3A and 3B corresponding to those magnetic encoders are shown in Charts C and D of Fig. 8, respectively. In this case, every two magnetic pole pairs of the magnetic encoder 2B correspond to three magnetic pole pairs of the magnetic encoder 2A and the absolute position within this interval can be detected. Chart E of Fig. 8 illustrates the waveform of an output signal indicative of the phase difference determined by the phase difference detecting section 6, shown in Fig. 1, based on the detection signals shown in Charts C and D of Fig. 8.

It is to be noted that Fig. 9 illustrates the waveforms of the detection phase and the phase difference associated with each of the magnetic sensors 3A and 3B. In other words, Charts A and B of Fig. 9 illustrate respective examples of the patterns of the magnetic poles in the magnetic encoders 2A and 2B, respectively; Charts C and D of Fig. 9 illustrate the waveforms of the respective detection phase of the magnetic sensors 3A and 3B; and Chart E of Fig. 9 illustrates the waveform of the phase difference outputted from the phase difference detecting section 6.

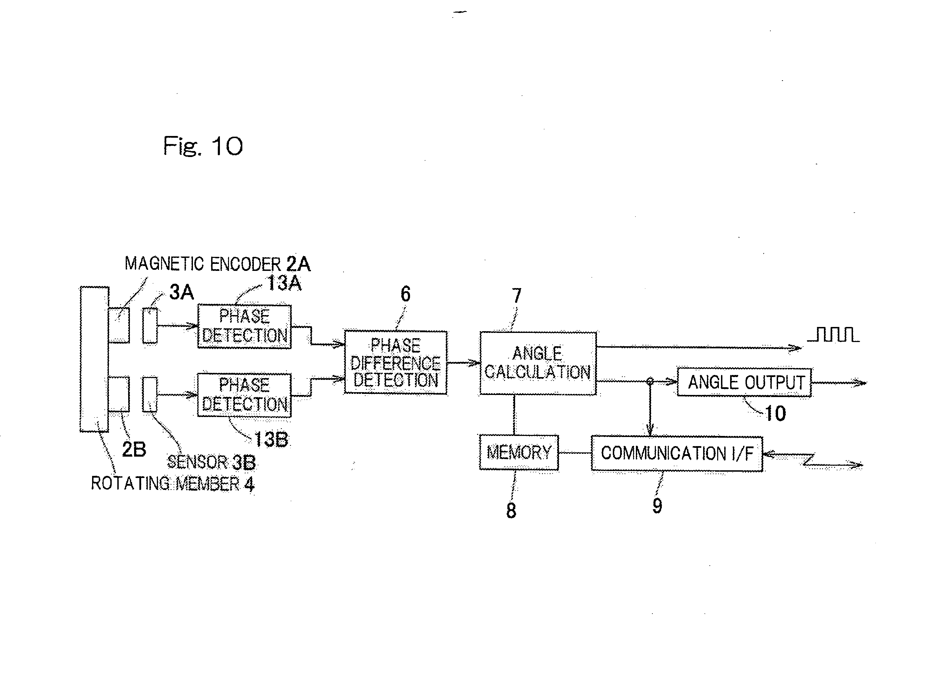

Fig. 10 illustrates an example of construction of the absolute angle detecting circuit employed in the rotation detecting device 1. Based on the respective detection signals from the magnetic sensors 3A and 3B shown in Charts C and D of Fig. 8, phase detecting circuits 13A and 13B associated respectively therewith output such detected phase signals as shown in Charts C and D of Fig. 9. The phase difference detecting section 6 then outputs such a phase difference signal as shown in Chart E of Fig. 9, based on those detected phase signals. The angle calculator 7 disposed in the stage subsequent thereto performs a process of converting the phase difference, determined by the phase difference detecting section 6, into the absolute angle in accordance with a predetermined calculation parameters. The calculation parameters used by the angle calculator 7 are stored in a memory 8 such as, for example, an involatile memory. In addition to the calculation parameter referred to above, the memory 8 stores various information required for the operation of the device such as, for example, a setting of the number of the magnetic poles in each of the magnetic encoders 2A and 2B, the absolute angle reference position and a signal outputting method. In this instance as shown, a communication interface 9 is disposed in the stage subsequent to the memory 8 so that the contents stored in the memory 8 can be updated through the communication interface 9. Accordingly, the individual setting informations can be variably set according to the status of use, thus facilitating the handleability.

The absolute angle information calculated by the angle calculator 7 is outputted from an angle information output circuit 10 or the communication interface 9 as a modulated signal such as, for example, a parallel signal, serial data, an analog voltage or PWM. A rotation pulse signal is also outputted from the angle calculator 7. For the rotation pulse signal, it is sufficient to output either of the respective detection signals of the two magnetic sensors 3A and 3B. As described previously, since each of the magnetic sensors 3A and 3B has its own multiplying function, it is possible to output the rotation signal with a high resolution.

The angle information output circuit 10 shown in Fig. 10 may be so configured that the absolute angle calculated by the angle calculator 7 can be outputted as an ABZ phase signal made up of two, A phase and B phase, pulse signals, which are displaced 90° in phase from each other, and a Z phase pulse signal indicative of the position of origin. In such case, the numbers of the magnetic pole pairs of the magnetic encoders 2A and 2B should be so set that the phase differences of the respective output signals of the magnetic sensors 3A and 3B coincide with each other once a complete rotation, or the Z phase pulse signal should be outputted for each complete rotation of the rotating member 4 through an electrical processing.

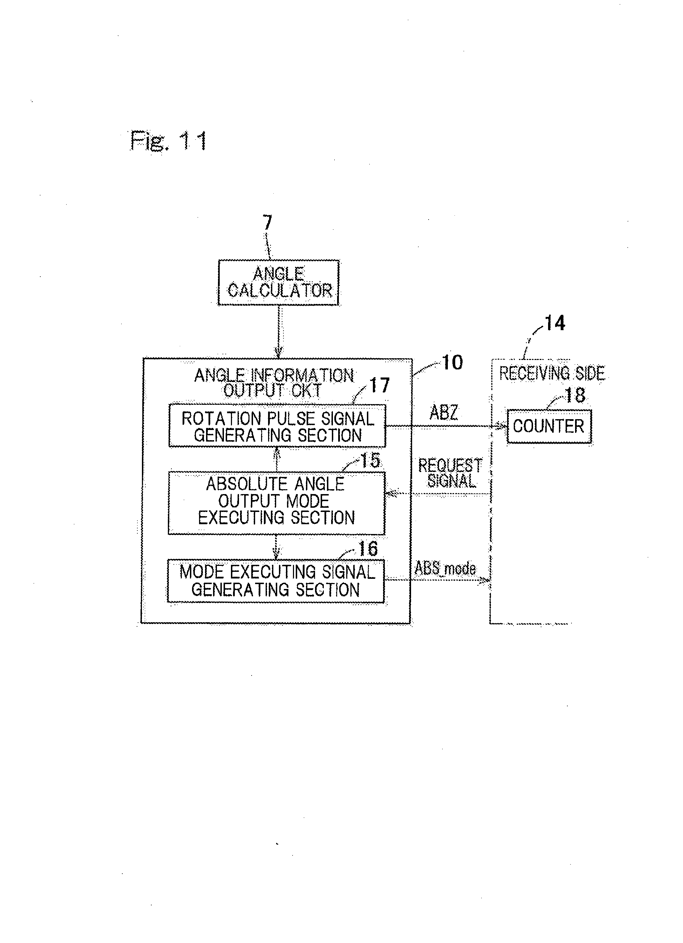

In the case where the ABZ signal is outputted, the angle information output circuit 10 may be so designed and so configured that as shown in Fig. 11, when a request signal to output the absolute angle is inputted from a receiving side circuit 14 to the angle information output circuit 10, an absolute angle output mode executing section 15 in the angle information output circuit 10 can be enabled in response to such request signal, a mode executing signal (ABS mode = 1) indicative of the absolute angle output mode taking place can be generated from a mode executing signal generating section 16 in the angle information output circuit 10, and A, B and Z phase signals can be outputted from a rotation pulse signal generating section 17 in the angle information output circuit 10.

In the receiving side circuit 14, a position counter 18 indicative of the absolute angle value is reset to 0 (zero) in response to receipt of the Z phase signal and the A phase signal and the B phase signal, outputted following the Z phase signal, are counted by the position counter 18. Once pulse outputs of the A phase signal and the B phase signal reach a current absolute angle value, the operation under the absolute angle output mode then terminates (ABS mode = 0). Thereafter, a rotation pulse signal (ABZ phase signal) dependent on a change of the absolute angle detected incident to rotation of the rotating member 4 (Fig. 1) is outputted from the angle calculator 7. Accordingly, in the receiving side circuit 14, which knows the absolute angle by counting pulses, the condition, in which actual absolute angle information is acquired at all time, establishes subsequent to termination of the operation under the absolute angle output mode (ABS mode = 0).

As hereinabove described, when arrangement is so made that the rotation pulse signal such as the ABZ phase signal can be outputted from the angle information output circuit 10 and the absolute angle information can be outputted under the absolute angle output mode, there is no need to use any extra interface for outputting the absolute angle and the circuit configuration of the rotation detecting device 1 and the circuit configuration on the side of a machine or equipment having the rotation detecting device 1 built therein can be simplified.

Also, in this rotation detecting device 1, the magnetic sensors 3A and 3B and a signal processing circuit, shown in Fig. 11, including the angle information output circuit 10 may be integrated together as a sensor module 11 as shown in the example of Fig. 2, and this sensor module 11 may be integrated on one and the same semiconductor chip. When so constructed, such merits as, for example, reduction in number of component parts used, increase of the positional accuracy of the magnetic sensors 3A and 3B relative to each other, reduction in manufacturing cost, reduction in assembling cost, and increase in detecting accuracy as a result of reduction in signal noise can be obtained and the rotation detecting device 1 can be advantageously constructed compact in size and low in cost.

It is to be noted that since in such case, one sensor module 11 is so positioned as to confront the two magnetic encoders 2A and 2B, the two magnetic encoders 2A and 2B are to be positioned in close vicinity to each other.

As discussed above, since the rotation detecting device 1 of the structure described hereinabove includes a plurality of magnetic encoders 2A and 2B having different numbers of magnetic poles and provided on a surface of a common ring-shaped core metal 12 in a concentric relation to each other, a plurality of magnetic sensors 3A and 3B for detecting respective magnetic fields emanating from the magnetic encoders 2A and 2B, and an angle calculating unit 19 for determining the absolute angle of the magnetic encoders 2A and 2B based on respective magnetic field signals detected by the magnetic sensors 3A and 3B, the absolute angle of the magnetic encoders 2A and 2B can be detected.

In particular, since the ring-shaped core metal 12 provided with the magnetic encoders 2A and 2B in the concentric relation to each other is formed with the ring-shaped bent portion 12aa of a bent shape protruding towards the encoder support surface side and positioned intermediate between the neighboring magnetic encoders 2A and 2B in the concentric relation with the magnetic encoders 2A and 2B, the neighboring magnetic encoders 2A and 2B are separated from each other by the intervention of the bent portion 12aa integral with the core metal 12. Accordingly, with no need to expanding the gap between the corresponding magnetic sensors 3A and 3B, the interference between the respective magnetic patterns of the magnetic encoders 2A and 2B can be minimized and the error in detecting the absolute angle, which results from the interference of the magnetic fields, can be reduced, thus making it possible to detect the absolute angle with a high accuracy. Also, since the absolute angle detecting accuracy can be increased with no need to expand the gap between the magnetic sensors 3A and 3B as discussed above, even when the magnetic sensors 3A and 3B are integrated on the semiconductor chip together with the calculating circuit or the like to provide the sensor module 11, the cost of manufacture can be reduced. As a result thereof, the structure is simplified and the absolute angle can be detected accurately with a high resolution.

Material for the core metal 12 may be either a non-magnetic material or a magnetic material. Even when the core metal 12 is made of the non-magnetic material, a function to separate the neighboring magnetic encoders 2A and 2B from each other by the intervention of the bent portion 12aa can be available and, therefore, an undesirable interference between the respective magnetic patterns emanating between the neighboring magnetic encoders 2A and 2B can be reduced advantageously. On the other hand, when the core metal 12 is made of the magnetic material, the interference between the magnetic patterns emanating between the neighboring magnetic encoders 2A and 2B can be minimized and the absolute angle can be accurately detected with no need to expand the gap between the corresponding magnetic sensors 3A and 3B.

Where the tip height of the bent portion 12aa of the core metal 12 is chosen to be equal to or greater than the surface height of the magnetic encoders 2A and 2B as shown in Fig. 5A, the interference between the magnetic patterns emanating from the neighboring magnetic encoders 2A and 2B, which are separated from each other by the intervention of the bent portion 12aa, can be further effectively suppressed and, hence, the absolute angle detecting accuracy can be further increased.

According to the present invention, the tip height of the bent portion 12aa of the core metal 12 is smaller than the surface height of the magnetic encoders 2A and 2B as shown in Fig. 5B. In this case, since the neighboring magnetic encoders 2A and 2B are completely separated from each other to form a gap therebetween at a location adjacent the tip of the bent portion 12aa, an effect to suppress the interference between the magnetic patterns emanating between the magnetic encoders 2A and 2B can be obtained. In addition, in such case, the distance between the core metal 12 and both of the magnetic sensors 3A and 3B can be properly secured.

Also, if the thickness of the tip of the bent portion 12aa of the core metal 12 is adjusted, the space between the neighboring magnetic encoders 2A and 2B can be set to an appropriate value consistent with a required absolute angle detecting accuracy. By way of example, when the space between the magnetic sensors 3A and 3B is set to 2 mm, the space between the neighboring magnetic encoders 2A and 2B (the thickness of the tip of the bent portion 12aa) is preferably about 0.5 mm. It is, however, to be noted that even when such space is merely 0.1 mm, it is possible to sufficiently increase the effect of reducing the interference of the magnetic patterns.

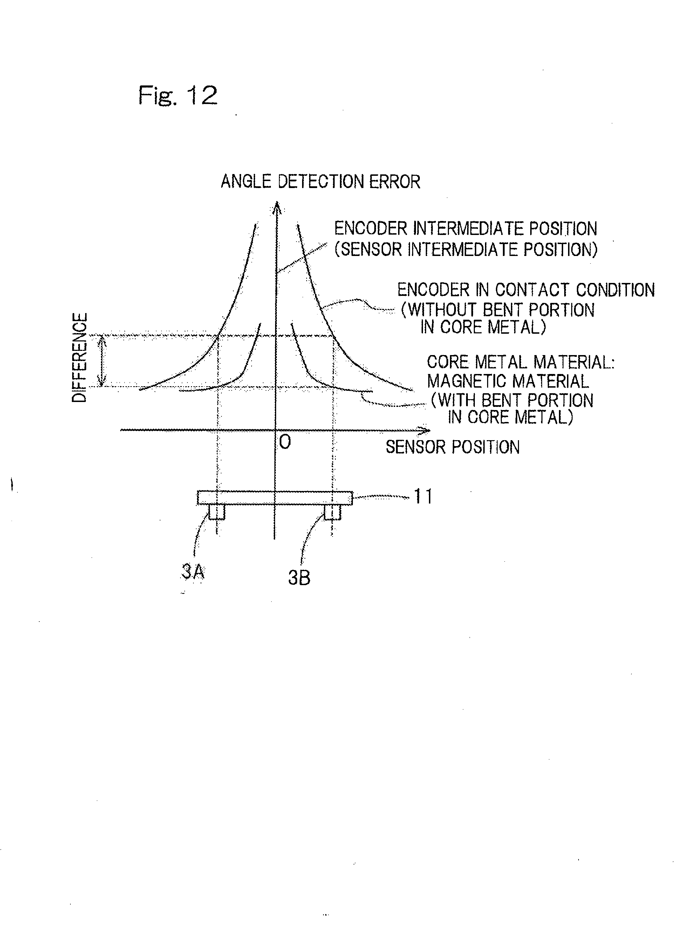

Fig. 12 illustrates a chart showing the result of comparison between the absolute angle detection error, exhibited by the rotation detecting device 1 according to the embodiment in which the neighboring magnetic encoders 2A and 2B are separated from each other by the intervention of the bent portion 12aa of the core metal 12, and the absolute angle error exhibited by the rotation detecting device of a similar structure, but in which the magnetic encoders 2A and 2B are juxtaposed relative to each other with no gap present therebetween. The chart shown in Fig. 12 makes it clear that even though the space between the magnetic sensors 3A and 3B remain the same, the rotation detecting device 1 according to the embodiment, which employs the bent portion 12aa, has exhibited the absolute angle detection error reduced as compared with that exhibited by the rotation detecting device in which the neighboring magnetic encoders 2A and 2B are juxtaposed relative to each other with no gap intervening therebetween.

In describing the foregoing embodiment, the use has been shown and described of the two magnetic encoders 2A and 2B, but the number of the magnetic encoders employed may not necessarily limited to two and a combination of three or more magnetic encoders each having a different number of magnetic pole pairs may be employed so that a further large range of the absolute angle can be detected. Where the rotation detecting device 1 is used in detecting the rotation of a motor, and if in adjusting the numbers of the magnetic poles a combination of P and P + Pn is chosen in consistency with the number of rotor poles Pn of the motor, the electrical angle of the motor can be detected by the rotation detecting device 1 and, therefore, it is convenient in rotation control of the motor.

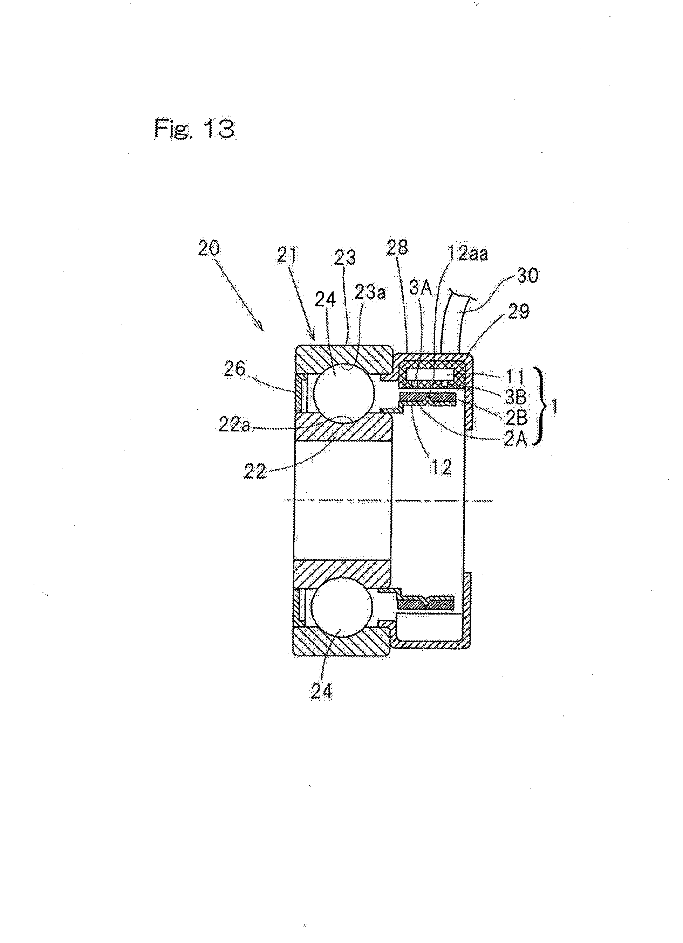

Fig. 13 illustrates a sectional representation showing a rotation detector equipped bearing assembly incorporating the rotation detecting device 1 according to the first embodiment as hereinbefore described and specified according to figure 5B. This rotation detector equipped bearing assembly 20 is of a structure, in which the rotation detecting device 1 referred to previously is provided in one end portion of a rolling bearing unit 21 including a plurality of rolling elements 24 interposed between an inner ring 22, which is a rotating raceway ring, and an outer ring 23, which is a stationary raceway ring. The rolling bearing unit 21 is in the form of a deep groove ball bearing and an outer diametric surface of the inner ring 22 and an inner diametric surface of the outer ring 23 are formed with respective roiling surfaces 22a and 23a, respectively, for a row of the rolling elements 24. A bearing space delimited between the inner ring 22 and the outer ring 23 has one end remote from a site of placement of the rotation detecting device 1, which is sealed by a sealing member 26.

Two magnetic encoders 2A and 2B of the rotation detecting device 1 are mounted on the outer diametric surface of the ring-shaped core metal 12, which is mounted on an outer diametric surface of one end portion of the inner ring 22 under interference fit, and juxtaposed relative to each other in the axial direction while separated from each other by the intervention of the bent portion 12aa integral with the core metal 12. The magnetic sensors 3A and 3B of the rotation detecting device 1 are integrated together with another signal processing circuit to provide the sensor module 11 as shown in Fig. 2, then enclosed with a resin molding 29 after having been inserted into a ring shaped sensor housing 28 made of a metallic material, and finally fitted to an inner diametric surface of one end portion of the outer ring 23 through the sensor housing 28. Accordingly, the magnetic encoders 2A and 2B and the mating magnetic sensors 3A and 3B are opposed relative to each other in the radial direction. A lead line 30 connected with the sensor module 1 is drawn outwardly to the outside through the sensor housing 28 and the sensor module 11 and an external circuit are therefore connected with each other through the lead line 30 for transmission of signals therebetween and supply of an electric power therebetween.

In this rotation detector equipped bearing assembly 20, since the rotation detecting device 1 of the structure shown and described in connection with the first embodiment is mounted on the rolling bearing unit 21, no positioning between the magnetic encoders 2A and 2B and the magnetic sensors 3A and 3B relative to each other is required and, therefore, it is indeed convenient. Also, while the absolute angle detecting function is maintained, not only can the number of component parts of a bearing using machine or equipment and the number of assembling steps be reduced, but downsizing can be accomplished.

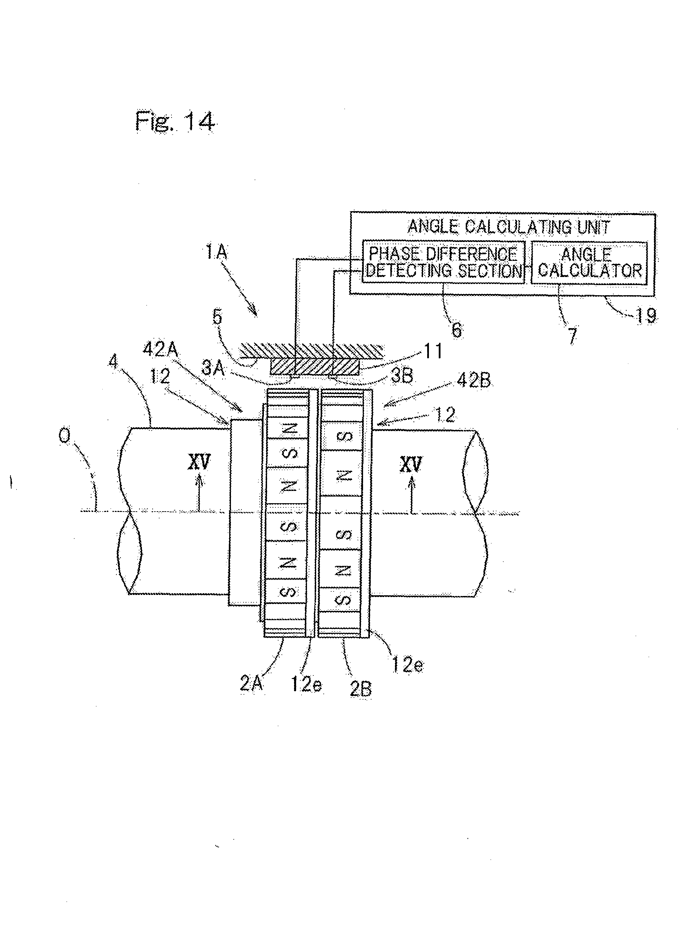

A second embodiment will now be described with particular reference to Figs. 14 to 18. Fig. 14 illustrates a schematic structure of the rotation detecting device according to this second embodiment. This rotation detecting device 1A, is substantially similar to the rotation detecting device 1 of the structure according to the first embodiment shown and described with particular reference to Fig. 1, but differs therefrom in that in place of the plural magnetic encoders 2A and 2B mounted on the common core metal in the rotation detecting device 1 according to the first embodiment, magnetic encoders 42A and 42B are employed and mounted respectively on a plurality of, for example, two, core metals, and, therefore, other structural features thereof than those described above are similar to those shown and described in connection with the first embodiment while identified by like reference numerals, for which reason the details thereof are not reiterated for the sake of brevity.

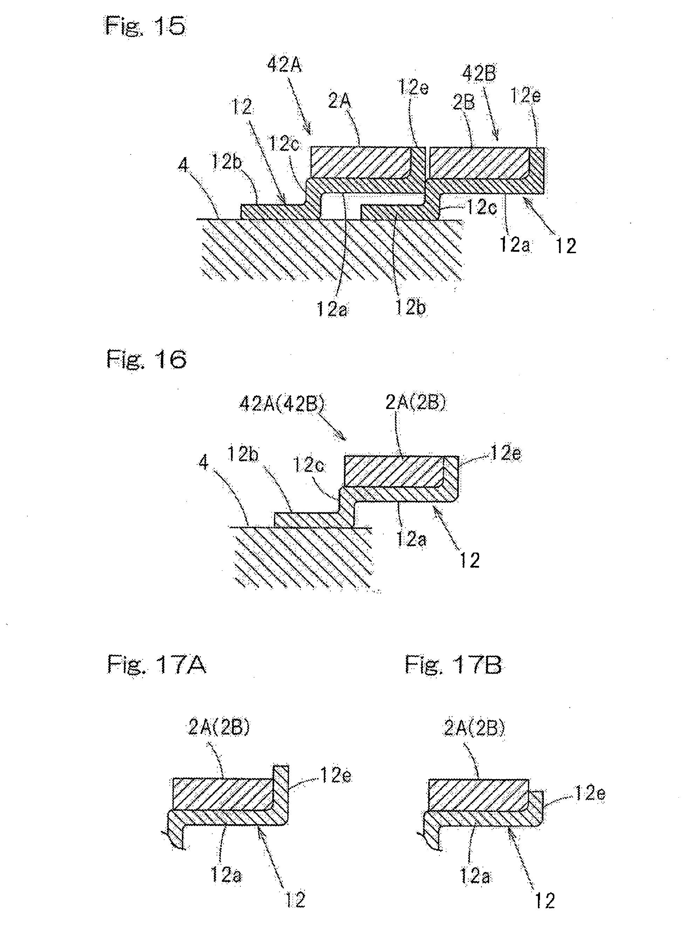

Fig. 15 illustrates a cross sectional representation taken along the line XV-XV in Fig. 14. As best shown therein, the first and second core metal equipped magnetic encoders 42A and 42B are juxtaposed relative to each other in the axial direction. Each of the core metal equipped magnetic encoders 42A and 42B is of a structure, in which the respective magnetic encoder 2A or 2B is provided on the outer peripheral surface of the cylindrical core metal 12 as shown in Fig. 16. The axially oriented ends (the right ends as viewed in Fig. 15) of the respective encoder support wall portions 12a of the core metals 12, which form the same side ends oriented axially same side, are formed with the respective projection portions, each in the form of the radially outwardly extending flange 12e that is, in the practice of the second embodiment, employed in place of the bent portion 12aa employed in the previously described first embodiment. Also, each of the axially oriented ends of the encoder support wall portions 12a of the core metals 12, which are opposite to the previously described axially oriented ends, is formed with the annular stepped wall portion 12c extending towards an inner diametric side and a cylindrical mount wall portion 12b extending from an inner diametric side end of the annular stepped portion 12c in a direction axially thereof.

With those cylindrical mount wall portions 12b mounted on the outer peripheral surface of the rotating member 4, the respective core metal 12 are fixed to the rotating member 4 for rotation together therewith. Also, the annular stepped wall 12c of each of the core metals 12 has a radial height chosen to be greater than the thickness of the corresponding cylindrical mount wall portion 12b so that the cylindrical mount wall portion 12b of one of the axially juxtaposed core metals 12 can be inserted into clearance formed inside the encoder support wall portion 12a of the other of the axially juxtaposed core metals 12. Accordingly, the magnetic encoders 2A and 2B of the neighboring core metal equipped magnetic encoders 42A and 42B are separated from each other by the radially outwardly extending flange 12e of the core metals 12 of the first core metal equipped magnetic encoder 42A. The radially outwardly extending flange 12e at a core metal end of such first core metal equipped magnetic encoder 42A is held in contact with the annular stepped portion 12c of the next adjacent second core metal equipped magnetic encoder 42B, but in this condition a gap is formed between the radially outwardly extending flange 12e of the first core metal equipped magnetic encoder 42A and the magnetic encoder 2B of the second core metal equipped magnetic encoder 42B and, therefore, the radially outwardly extending flange 12e of the first core metal equipped magnetic encoder 42A is held in non-contact with the magnetic encoder 2B of the second core metal equipped magnetic encoder 42B.

The tip height of the radial flange 12e of each of the core metals 12 may be so chosen as to be greater than the surface height of the corresponding magnetic encoder 2A or 2B as shown in Fig. 17A or, according to the present invention; it has a tip height which is smaller than the surface height of each of the magnetic encoders 2A and 2B with the neighboring magnetic encoders 2A and 2B held in non-contact with each other by a radial outer tip of the radially outwardly extending flange 12e as shown in Fig. 17B.

As hereinabove described, since the rotation detecting device 1A of the second embodiment, is of the structure, in which the magnetic encoders 2A and 2B, each having the magnetic poles deployed in the circumferential direction thereof, are mounted on the outer peripheral surface of the respective cylindrical core metals 12, and includes the plurality of the core metal equipped magnetic encoders 42A and 42B having different numbers of the magnetic poles and juxtaposed relative to each other in the axial direction, the plurality of the magnetic sensors 3A and 3B cooperable with the core metal equipped magnetic encoders 42A and 42B for detecting respective magnetic fields emanating from those core metal equipped encoders 42A and 42B, and the angle calculating unit 19 for determining the absolute angles of the magnetic encoders 2A and 2B based on the magnetic field signals detected by those magnetic sensors 3A and 3B, the absolute angle of the magnetic encoders 2A and 2B can be detected in a manner similar to that achieved by the previously described rotation detecting device 1.

Particularly since the radially outwardly extending flanges 12e are formed in the axially oriented ends on the axially same side of the respective core metals of the core metal equipped magnetic encoders 42A and 42B, which form the same side ends thereof, the neighboring magnetic encoders 2A and 2B are separated from each other by one of the radially outwardly extending flanges 12e of the corresponding core metals 12, which is situated intermediate between the magnetic encoders 2A and 2B. Accordingly, with no need to expanding the gap between the corresponding magnetic sensors 3A and 3B, the interference between the respective magnetic patterns of the magnetic encoders 2A and 2B can be minimized and the error in detecting the absolute angle, which results from the interference of the magnetic fields, can be reduced, thus making it possible to detect the absolute angle with a high accuracy. Also, since the absolute angle detecting accuracy can be increased with no need to expand the gap between the magnetic sensors 3A and 3B as discussed above, even when the magnetic sensors 3A and 3B are integrated on the semiconductor chip together with the calculating circuit or the like to provide the sensor module 11, the cost of manufacture can be reduced. In addition, the rigidity of each of the core metals 12 can be increased as a result that the flange 12e is formed in one end of the respective core metal 12 and an undesirable deformation of each of the magnetic encoders 2A and 2B, which would otherwise occur when the respective core metal 12 is mounted on the rotating member 4 (Fig. 14), can be suppressed, allowing the absolute angle to be detected with a high accuracy.

Where the tip height of the flange 12e in each of the core metals 12 is chosen to be equal to or greater than the surface height of the magnetic encoders 2A and 2B as shown in Fig. 17A, the undesirable interference between the respective magnetic patterns emanating between the neighboring magnetic encoders 2A and 2B that are separated by the intervention of the flange 12e can be further effectively suppressed and the accuracy of detecting the absolute angle can therefore be increased further.

As hereinbefore discussed, the tip height of the flange 12e of each of the core metals 12 may be chosen to be smaller than the surface height of the magnetic encoders 2A and 2B as shown in Fig. 17B. Even in such case, since the neighboring magnetic encoders 2A and 2B are completely separated from each other at a location adjacent the tip of the flange 12e, i.e., a radially outer edge of the flange 12e, an effect to suppress the interference between the magnetic patterns emanating between the magnetic encoders 2A and 2B can be obtained. In addition, in such case, the distance between the core metal 12 and both of the magnetic sensors 3A and 3B can be properly secured.

Even in the second embodiment described hereinabove, effects similar to those afforded in the example of the previously described first embodiment, which is shown and described with reference to Fig. 12, can be obtained and, as compared with the rotation detecting device, in which the neighboring magnetic encoders 2A and 2B are juxtaposed relative to each other with no gap present therebetween, the absolute angle detection error can be reduced.

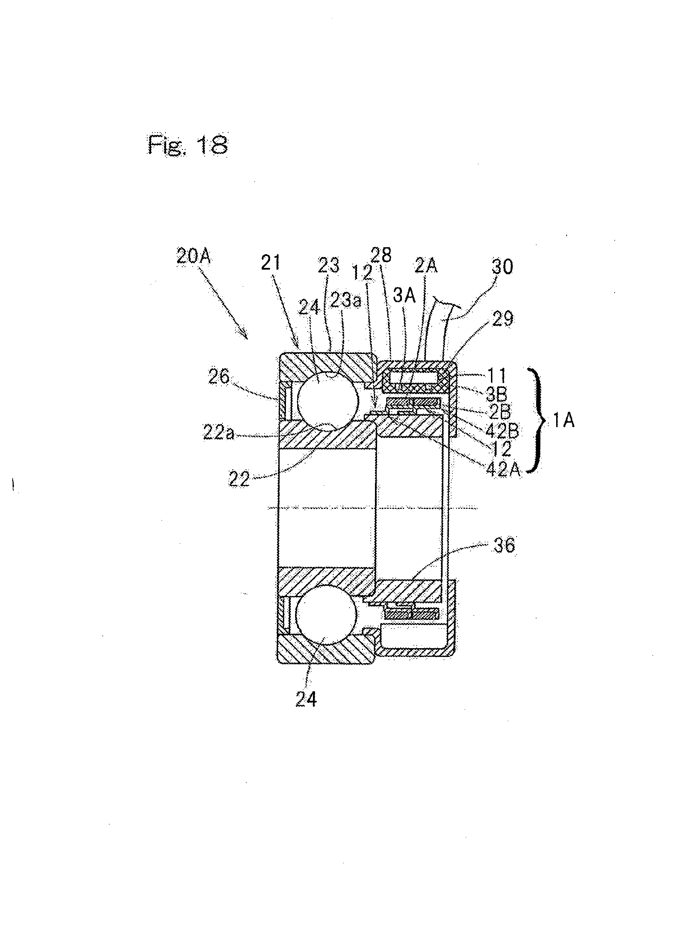

Fig. 18 illustrates a sectional representation of the rotation detector equipped bearing assembly incorporating the rotation detecting device 1A of the kind described hereinabove. This rotation detector equipped bearing assembly 20A makes use of the magnetic encoders 42A and 42B fitted to the respective core metals, in place of the magnetic encoders 2A and 2B fitted to the common core metal employed in the rotation detector equipped bearing assembly 20 shown in and described with particular reference to Fig. 13.

The core metal equipped magnetic encoders 42A and 42B employed in the rotation detecting device 1A are axially juxtaposed relative to each other on an outer diametric surface of a ring shaped support member 36 that is mounted under, with the magnetic encoders 2A and 2B thereof separated by the flange 12e of one 42A of the core metal equipped magnetic encoders. The two magnetic sensors 3A and 3B of the rotation detecting device 1A are integrated together with another signal processing circuit to form the sensor module 11.

Although the present invention has been fully described in connection with the embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### (Reference Numerals)

- 1:: Rotation detecting device
- 2A, 2B:: Magnetic encoder
- 3A, 3B:: Magnetic sensor
- 3A1, 3A2:: Magnetic sensor element
- 3AA, 3AB:: Line sensor
- 12:: Core metal
- 12aa:: Bent shaped, bent portion (Projection portion)
- 12e:: Flange (Projection portion)
- 19:: Angle calculating unit
- 20:: Rotation detector equipped bearing assembly
- 21:: Rolling bearing unit
- 42A, 42B:: Core metal equipped magnetic encoder

## Claims

1. A rotation detecting device which comprises:
a plurality of ring-shaped magnetic encoders (2A,2B) provided concentrically with each other and having different numbers of magnetic poles, each of the magnetic encoders (2A,2B) having a magnetization row pattern with a plurality of magnetic poles arranged circumferentially thereof;
a plurality of magnetic sensors (3A,3B) each operable to detect a magnetic field emanating from the corresponding magnetic encoder (2A,2B);
an angle calculating unit for determining the absolute angle of the magnetic encoders (2A,2B) based on magnetic field signals detected respectively by the magnetic sensors (3A,3B); and
at least one core metal (12) carrying the plurality of the magnetic encoders (3A,3B),
**characterized in that** the core metal (12) is formed integrally with a projection portion (12aa) protruding towards an encoder support surface side, on which the magnetic encoders (2A,2B) are mounted, the projection portion (12aa) being situated intermediate between the neighboring magnetic encoders (2A,2B), and **in that** said projection portion (12aa) further has a tip height chosen to be lower than a surface height of the magnetic encoders (2A,2B) with the neighboring magnetic encoders on respective sides of the projection portion (12aa) separated from each other by a tip of the projection portion intervening therebetween.

2. The rotation detecting device as claimed in claim 1, wherein the plurality of the magnetic encoders (2A,2B) are mounted on a single common core metal (12) and the projection portion (12aa) is in the form of a bent portion having a ring shape that protrudes towards the encoder support surface side formed in the common core metal (12) with the magnetic encoders (2A,2B) mounted thereon.

3. The rotation detecting device as claimed in claim 1, wherein the core metal (12) is made of a magnetic material.

4. The rotation detecting device as claimed in claim 1, wherein each of the magnetic encoders (2A,2B) includes a rubber magnet formed by bonding an elastic member, mixed with a powdery magnetic material, by vulcanization to the corresponding core metal (12) made of a magnetic material, and then forming magnetic poles alternately in a direction circumferentially of such core metal.

5. The rotation detecting device as claimed in claim 1, wherein each of the magnetic encoders (2A,2B) includes a resin magnet formed by providing the corresponding core metal (12), made of a magnetic material, with a resin formed body, formed of a resin mixed with a powdery magnetic material, and then forming magnetic poles alternately in a direction circumferentially of such core metal.

6. The rotation detecting device as claimed in claim 1, in which each of the magnetic encoders (2A,2B) is in the form of a sintered magnet formed by forming in a sintered body, made of a sintered mixture of a powdery magnetic material and a powdery non-magnetic material, magnetic poles alternately in a direction circumferentially.

7. The rotation detecting device as claimed in claim 1, wherein each of the magnetic sensors (3A,3B) includes a line sensor having a plurality of sensor elements arranged in a direction in which magnetic poles of each of the magnetic encoders (2A,2B) are arranged.

8. A rotation detector equipped bearing assembly, having the rotation detecting device as defined in claim 1 incorporated therein.

## Patentansprüche

1. Rotationserfassungsvorrichtung, die Folgendes umfasst:
mehrere ringförmige magnetische Encoder (2A, 2B), die konzentrisch zueinander angeordnet sind und
unterschiedliche Anzahlen von Magnetpolen aufweisen,
wobei jeder der magnetischen Encoder (2A, 2B) ein Magnetisierungsreihenstruktur mit mehreren Magnetpolen, die umlaufend dazu angeordnet sind,
aufweist;
mehrere Magnetsensoren (3A, 3B), die jeweils betriebsfähig sind, um ein Magnetfeld, das von dem entsprechenden magnetischen Encoder (2A, 2B) ausgeht,
zu erkennen;
eine Winkelberechnungseinheit zum Ermitteln des absoluten Winkels der magnetischen Encoder (2A, 2B) basierend auf Magnetfeldsignalen, die jeweils von Magnetsensoren (3A, 3B) erfasst werden; und
mindestens ein Kernmetall (12), das die mehreren magnetischen Encoder (2A, 2B) trägt,
**dadurch gekennzeichnet, dass** das Kernmetall (12) integral mit einem Vorsprungsabschnitt (12aa), der in Richtung einer Encoderstützflächenseite vorsteht, auf der die magnetischen Encoder (2A, 2B) montiert sind,
gebildet ist, wobei der Vorsprungsabschnitt (12aa) zwischen den angrenzenden magnetischen Encodern (2A, 2B) liegend montiert ist, und dadurch, dass der Vorsprungsabschnitt (12aa) ferner eine Spitzenhöhe aufweist, die dazu ausgewählt wurde, niedriger als eine Flächenhöhe der magnetischen Encoder (2A, 2B) zu sein, wobei die angrenzenden magnetischen Encoder auf jeweiligen Seiten des Vorsprungsabschnitts (12aa) durch eine dazwischentretende Spitze des Vorsprungsabschnitts voneinander getrennt sind.

2. Rotationserfassungsvorrichtung nach Anspruch 1, wobei die mehreren magnetischen Encoder (2A, 2B) auf einem einzelnen gemeinsamen Metallkern (12) montiert sind und der Vorsprungsabschnitt (12aa) in Form eines gebogenen Abschnitts ist, der eine Ringform aufweist, die in Richtung der in dem gemeinsamen Kernmetall (12) gebildeten Encoderstützflächenseite vorsteht, wobei die magnetischen Encoder (2A, 2B) darauf montiert sind.

3. Rotationserfassungsvorrichtung nach Anspruch 1, wobei das Kernmetall (12) aus einem magnetischen Material besteht.

4. Rotationserfassungsvorrichtung nach Anspruch 1, wobei jeder der magnetischen Encoder (2A, 2B) einen Gummimagneten umfasst, der durch Binden eines elastischen Glieds, das mit einem pulverförmigen magnetischen Material versetzt ist, durch Vulkanisation mit dem entsprechenden Kernmetall (12), das aus einem magnetischen Material besteht, und anschließendem Bilden magnetischer Pole abwechselnd in einer Richtung, die umlaufend zu einem derartigen Kernmetalls ist, gebildet wird.

5. Rotationserfassungsvorrichtung nach Anspruch 1, wobei jeder der magnetischen Encoder (2A, 2B) einen Harzmagneten umfasst, der durch Versehen eines entsprechenden Kernmetalls (12), das aus einem magnetischen Material besteht, mit einem harzgeformten Körper, der aus einem mit einem pulverförmigen magnetischen Material versetzten Harz besteht, und anschließendem Bilden magnetischer Pole abwechselnd in einer Richtung, die umlaufend zu einem derartigen Kernmetall ist, gebildet wird.

6. Rotationserfassungsvorrichtung nach Anspruch 1, wobei jeder der magnetischen Encoder (2A, 2B) in der Form eines Sintermagneten ist, der durch Bilden magnetischer Pole abwechselnd in einer umlaufenden Richtung in einem Sinterkörper, der aus einer gesinterten Mischung eines pulverförmigen magnetischen Materials und eines pulverförmigen nicht magnetischen Materials hergestellt ist, gebildet wird.

7. Rotationserfassungsvorrichtung nach Anspruch 1, wobei jeder der Magnetsensoren (3A, 3B) einen Liniensensor umfasst, der mehrere Sensorelemente, die in einer Richtung angeordnet sind, in der die Magnetpole von jedem der magnetischen Encoder (2A, 2B) angeordnet sind, aufweist.

8. Mit Rotationerfassung ausgestattete Lageranordnung, wobei die Rotationserfassungsvorrichtung nach Anspruch 1 darin integriert ist.

## Revendications

1. Dispositif de détection de rotation, qui comprend :
une pluralité de codeurs magnétiques annulaires (2a, 2b) prévus de manière concentrique les uns avec les autres et ayant des nombres différents de pôles magnétiques, chacun des codeurs magnétiques (2A, 2B) ayant une configuration de ligne de magnétisation avec une pluralité de pôles magnétiques disposés sur la circonférence de celui-ci ;
une pluralité de capteurs magnétiques (3A, 3B), chacun pouvant fonctionner pour détecter un champ magnétique émanant du codeur magnétique correspondant (2A, 2B) ;
une unité de calcul de l'angle pour déterminer l'angle absolu des codeurs magnétiques (2A, 2B) sur la base de signaux de champ magnétique détectés respectivement par les capteurs magnétiques (3A, 3B) ; et
au moins un élément formant noyau métallique (12) portant la pluralité de codeurs magnétiques (3A, 3B),
**caractérisé en ce que** l'élément formant noyau métallique (12) est formé d'un seul tenant avec une partie en projection (12aa) faisant saillie vers un côté de la surface de support de codeur, sur laquelle les codeurs magnétiques (2A, 2B) sont montés, la partie en projection (12aa) étant située à une position intermédiaire entre les codeurs magnétiques voisins (2A, 2B), et **en ce que** ladite partie en projection (12aa) présente en outre une hauteur de pointe choisie pour être inférieure à une hauteur de la surface des codeurs magnétiques (2A, 2B) avec les codeurs magnétiques voisins sur des côtés respectifs de la partie en projection (12aa) séparés l'un de l'autre par une pointe de la partie en projection intervenant entre les deux.

2. Dispositif de détection de rotation selon la revendication 1, dans lequel la pluralité de codeurs magnétiques (2A, 2B) sont montés sur un seul élément formant noyau métallique commun (12) et la partie en projection (12aa) est sous la forme d' une partie coudée ayant une forme d'anneau qui fait saillie vers le côté de la surface de support de codeur formé dans l'élément formant noyau métallique commun (12) avec les codeurs magnétiques (2A, 2B) montés sur celui-ci.

3. Dispositif de détection de rotation selon la revendication 1, dans lequel l'élément formant noyau métallique (12) est réalisé en un matériau magnétique.

4. Dispositif de détection selon la revendication 1, dans lequel chacun des codeurs magnétiques (2A, 2B) comprend un aimant en caoutchouc formé par la liaison d'un élément élastique en mélange avec un matériau magnétique pulvérulent, par vulcanisation à l'élément formant noyau métallique correspondant (12) réalisé en un matériau magnétique, avec ensuite la formation des pôles magnétiques en alternance dans une direction circonférentielle dudit élément formant noyau métallique.

5. Dispositif de détection de rotation selon la revendication 1, dans lequel chacun des codeurs magnétiques (2A, 2B) comprend un aimant de résine formé en munissant l'élément formant noyau métallique correspondant (12), réalisé en un matériau magnétique, d'un corps formé en résine, formé d'une résine mélangée avec un matériau magnétique pulvérulent, avec formation ensuite des pôles magnétiques en alternance dans une direction circonférentielle dudit élément formant noyau métallique.

6. Dispositif de détection de rotation selon la revendication 1, dans lequel chacun des codeurs magnétiques (2A, 2B) est sous la forme d'un aimant fritté en formant dans un corps fritté, constitué d'un mélange fritté d'un matériau magnétique pulvérulent et d'un matériau non magnétique pulvérulent, des pôles magnétiques en alternance dans une direction circonférentielle.

7. Dispositif de détection de rotation selon la revendication 1, dans lequel chacun des capteurs magnétiques (3a, 3b) comprend un capteur linéaire ayant une pluralité d'éléments capteurs disposés dans une direction selon laquelle sont disposés les pôles magnétiques de chacun des codeurs magnétiques (2A, 2B).

8. Ensemble de palier muni d'un détecteur de rotation, incorporant le dispositif de détection de rotation selon la revendication 1.
